# EUROPEAN PATENT APPLICATION

(11) **EP 0 559 173 A1**
(43) Date of publication of application: **08.09.1993**
(21) Application number: 93103391.4
(22) Date of filing: 03.03.1993
(51) Int. Cl.: B60T 8/42

(54) **Brake fluid pressure control apparatus for anti skid brakes**

(30) Priority: 05.03.1992 JP 48917/92
(71) Applicant: TOKICO LTD., Kawasaki-shi Kanagawa-ken (JP)
(72) Inventor: Ando, Hiromi, Nakakoma-gun, Yamanashi-ken (JP); Sano, Kenji, Higashiyatsushiro-gun, Yamanashi-ken (JP)
(74) Representative: Kehl, Günther, Dipl.-Phys.

(57) **Abstract**

The present invention provides a brake fluid pressure control apparatus (1) in which a groove portion (30) which together with communicating to an inner orifice, communicates also to a pump communication port (13) by means of the end portion of the spool opposite the direction of movement, is provided on the periphery of a spool provided inside a flow valve (6). In addition, a pump communication port (13) and a master cylinder communication port (9) are provided coaxially, and the master cylinder communication port (9) is formed at a diameter which is a predetermined amount smaller than that of the pump communication port (13), in a manner such that during anti-skid control, the master cylinder communication port (9) does not directly communicate with the aforementioned groove portion. During anti-skid control when the spool enters a state of motion, this groove portion and master cylinder communication port (9) become minutely communicated via a clearance contained therebetween, and since a minute portion of the brake fluid discharged from the pump is designed to return to the master cylinder (2), unpleasant pedal kickback can be prevented, and the need for providing an outer orifice in the casing can be eliminated.

## Description

### BACKGROUND OF THE INVENTION

The present invention relates to brake fluid pressure control apparatus with anti-skid control function for use in brake apparatuses of vehicles.

### Relevant Art

Among brake fluid pressure control apparatuses for use in anti-skid control currently employed in vehicle braking apparatuses designed to prevent locking of wheels during braking, Japanese patent application first publication No. Hei 1-297350 (U.S. Patent No. 4,988,148) is known.

This apparatus is equipped with a flow valve possessing a casing and a spool provided inside of this casing. This casing also possesses a master cylinder communication port communicating to a master cylinder, a wheel cylinder communication port communicating to a wheel cylinder, a reservoir communication port communicating to a reservoir with brake fluid storage capabilities via a normally closed valve, and a pump communication port communicating to the discharge side of a pump which intakes and discharges brake fluid from the reservoir.

The aforementioned spool, during anti-skid control, moves by means of the difference in pressure created on both sides of this spool due to the opening of the normally closed valve, and together with limiting the communication between the master cylinder communication port and the wheel cylinder communication port, this spool intakes brake fluid from pump communication port which was discharged from the pump, and supplies this aforementioned brake fluid to the wheel cylinder communication port or the reservoir communication port in an approximate fixed flow amount via an inner restricted orifice provided on the inner portion.

This brake pressure control apparatus is designed to prevent pedal kickback which creates unpleasant effects such as large vibrations during anti-skid control. Namely, in order to return the brake fluid discharged from the pump during anti-skid control to the master cylinder in an approximate fixed flow amount, a structure is disclosed in which a circuit is provided in the casing communicating the master cylinder communication port and the pump communication port on the outside, and within this circuit an outer orifice (restrictor) is provided.

However, in the aforementioned brake fluid pressure control apparatus, since the circuit communicating the master cylinder communication port and pump communication port is provided in the casing, an outer orifice must be provided separately in this circuit resulting in problems such as large increases in the casing size as well as manufacturing costs.

It also is possible to reduce pedal kickback by producing an outer orifice with a small diameter which reduces the amount of brake fluid returning to the master cylinder from the discharge side of the pump. However, not only is it difficult to produce an outer orifice with a small diameter, but clogging of the outer orifice also occurs when this diameter is small.

### SUMMARY OF THE PRESENT INVENTION

The purpose of the present invention is to provide a brake fluid pressure control apparatus which can prevent unpleasant pedal kickback and in being compact can effectively lower manufacturing costs, wherein a circuit and outer orifice communicating master cylinder communication port and pump communication port are not provided in a casing.

In order to achieve the above mentioned objectives, the present invention, in order to perform anti-skid control of vehicles, supplies a brake fluid pressure control apparatus possessing anti-skid control function which carries out, in response to the behavior of the vehicle wheels, pressure decrease and pressure increase (repressurization) of brake fluid pressure supplied from a master cylinder, connecting to a brake pedal, to a wheel cylinder which performs braking of vehicle wheels; this brake fluid pressure control apparatus being provided in between the master cylinder and wheel cylinder and comprising:
(A) a normally closed valve which opens when brake fluid pressure decreases, and closes when brake fluid pressure increases;
(B) a reservoir for receiving brake fluid during brake fluid pressure decrease;
(C) a pump which intakes brake fluid inside of said reservoir and discharges this brake fluid;
(D) a flow valve comprising:
   (a) a casing comprising:
      (1) master cylinder communication port communicating to the master cylinder;
      (2) wheel cylinder communication port communicating to the wheel cylinder;
      (3) reservoir communication port communicating to the reservoir and intake side of the pump via the normally closed valve; and
      (4) pump communication port communicating to the discharge side of the pump;
   (b) a spool, provided moveably inside the casing; the spool, at the time of anti-skid control, moves by means of the difference in pressure created on both sides of this spool due to the opening of the normally closed valve, and together with limiting communication between the master cylinder communication port and the wheel cylinder communication port, this spool intakes brake fluid from pump communication port which was discharged from the pump, and supplies this brake fluid to one of wheel cylinder communication port or reservoir communication port in an approximate fixed flow amount via an inner orifice provided on the inner portion;
   wherein a groove portion, provided on the periphery of the spool, communicates to the pump communication port during anti-skid control by means of the part of the groove portion which lies opposite the direction of movement of the spool;
   an axis of said pump communication port and an axis of said master cylinder communication port are arranged so that they are positioned on the plane which lies orthogonal to the direction of movement of the spool, and the diameter of the master cylinder communication port is formed smaller than the diameter of the pump communication port by a predetermined amount in a manner such that during anti-skid control the master cylinder communication port does not communicate directly with the groove portion.

With the structure of the present invention, during anti-skid control when the spool moves, the groove portion of the spool communicates with pump communication port by means of the end portion of the spool opposite the direction of movement. At this time, the master cylinder communication port which is arranged coaxially with the pump communication port, as a result of having a diameter a predetermined amount smaller than that of the pump communication port, becomes minutely, but not directly, communicated to the groove portion via a clearance between the inner periphery face of the casing and the outer periphery face of the spool, in between the master cylinder communication port and groove portion.

As a result, the brake fluid discharged from the pump is designed to flow from the pump communication port in an approximate fixed flow amount to the wheel cylinder communication port or the reservoir communication port via the groove portion and inner orifice, and a minute portion this brake fluid is designed to return from the discharge side of the pump to the master cylinder communication port by means of the clearance between the inner periphery face of the casing, and the outer periphery face of the spool.

Consequently, this clearance serves as an orifice communicating the pump communication port and master cylinder communication port, preventing unpleasant pedal kickback and moreover, making unnecessary both a circuit and outer orifice communicating the master cylinder communication port and the pump communication port. In this manner, the brake fluid pressure control apparatus of the present invention can be made compact and manufacturing costs therein can be reduced.

### A BRIEF DESCRIPTION OF THE DRAWINGS

Fig. 1 schematically shows an outline of the construction of a brake fluid pressure control apparatus according to a first preferred embodiment of the present invention.
Fig. 2 schematically shows an outline of the construction of a flow valve of a brake fluid pressure control apparatus according to a first preferred embodiment of the present invention during anti-skid control pressure decrease.
Fig. 3 is a cross sectional view showing a relief valve of a brake fluid pressure control apparatus according to a first preferred embodiment of the present invention.
Fig. 4 is a cross sectional view taken along the line X-X of the flow valve of a brake fluid pressure control apparatus according to a first preferred embodiment of the present invention.
Fig. 5 schematically shows the construction of a modification of a flow valve of a brake fluid pressure control apparatus according to a first preferred embodiment of the present invention.
Fig. 6 schematically shows an outline of the construction of a flow valve of a brake fluid pressure control apparatus according to a second preferred embodiment of the present invention during anti-skid control pressure decrease.

### A DETAILED DESCRIPTION OF THE PREFERRED EMBODIMENTS

In the following, a description of the brake fluid pressure control apparatus according to the first preferred embodiment will be given with reference to Fig.s 1∼4. Furthermore, upper/lower parts of the figure will be referred to for convenience sake as "upper/lower" or "top/bottom" in the following description.

Numeral 1 is a brake fluid pressure control apparatus for use in anti-skid control. Numeral 2 is a master cylinder. Numeral 4 is a wheel cylinder. Master cylinder 2 connects to brake pedal 3 and generates brake fluid pressure in response to pressing of this brake pedal 2. Wheel cylinder 4 brakes the vehicle wheels by means of brake fluid pressure.

Flow valve 6 is provided on channel 5 which communicates to master cylinder 2. This flow valve 6 contains a casing 8. Casing 8 contains cylindrical portion 7 possessing a cylindrical shape, and a plurality of ports provided in this cylindrical portion 7.

The aforementioned ports include first port 9 (master cylinder communication port), second port 11 (wheel cylinder communication port), third port 12 (reservoir communication port) and fourth port 13 (pump communication port).

First port 9 is provided at a predetermined position orthogonal to the axis of cylindrical portion 7 in a manner such that it communicates to master cylinder 2 via channel 5.

Second port 11 is provided at a predetermined position below the first port 9, and communicates to wheel cylinder 4 via channel 10.

Third port 12 is provided at a predetermined position on the lower part of cylindrical portion 7, orthogonal to the axis of the aforementioned cylindrical portion 7.

Fourth port 13 is arranged opposite first port 9, with its axis being arranged coaxially to that of first port 9.

The aforementioned second port 11 is formed from upper port 14 and lower port 15.

Upper port 14 is provided at a predetermined position below and parallel to first port 9.

Lower port 15 is provided at a predetermined position below and parallel to upper port 14, and communicates to upper port 14 at the outer side of cylindrical portion 7.

In the present embodiment, first port 9 is formed at a diameter smaller than that of fourth port 13.

As well, third port 12 of flow valve 6 communicates to variable capacity reservoir 16 via channel 17. On this channel 17 between flow valve 6 and reservoir 16, an electromagnetic normally closed valve 18 (normally closed valve) is provided. Fourth port 13 of flow valve 6 communicates to reservoir 16 via channel 19. On this channel 19 between flow valve 6 and reservoir 16, pump 20 is provided. This pump 20 consists of pump main element 21, intake valve 22 and discharge valve 23. Pump main element 21 carries out intake and discharge of brake fluid. Intake valve 22 is provided on the reservoir 16 side of pump main element 21, while discharge valve 23 is provided on the side opposite reservoir 16 of pump main element 21. Pump 20 is designed to intake brake fluid from the reservoir 16, and discharge it to the fourth port 13 of flow valve 6.

In addition, in flow valve 6, a cylindrical column shaped spool 24 is inserted into the inside of cylindrical portion 7 of casing 8, in a vertically slidable manner. This spool 24 contains an upper aperture 25 having a predetermined diameter, and a lower aperture 26 lying on the same axis and possessing the same diameter as the upper aperture 25. Upper aperture 25 is provided at predetermined position midway from the upper end of spool 24 facing centrally in an axial direction. Lower aperture 26 is provided at a predetermined position midway from the lower end of spool 24, and communicates normally with third port 12. Upper aperture 25 and lower aperture 26 communicate reciprocally via inner restricted orifice 27 formed at a predetermined diameter smaller than these two apertures.

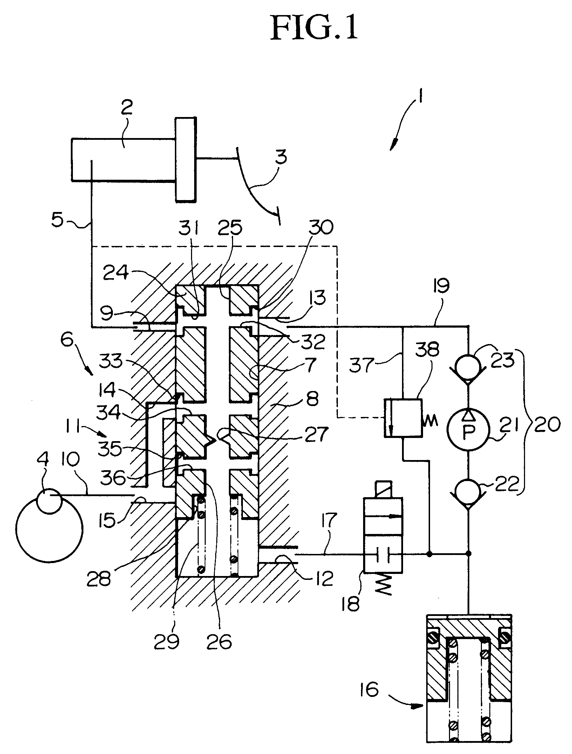

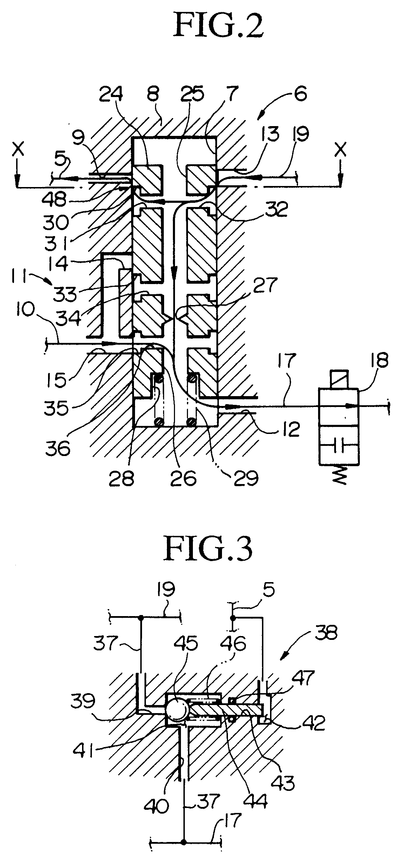

Further, opening portion 28 at the bottom end of lower aperture 26 is formed at a predetermined diameter larger than the other portions. The upper end of a spring 29, which biases spool 24 vertically at a predetermined force, is inserted into this opening portion 28. By means of the biasing force of spring 29, the upper end of spool 24 is normally in contact with the upper end of cylindrical portion 7 (this state, shown in Fig. 1, will be referred to hereinafter as "stationary state"). Following opening the aforementioned electromagnetic normally closed valve 18, spool 24 moves downward(this state, shown in Fig. 2, will be referred to hereinafter as "state of motion") by means of the difference in pressure on both sides of inner orifice 27 caused by the flow of brake fluid inside lower aperture 26 to reservoir 16.

In spool 24 a first groove 30 having a predetermined width is provided around the entire periphery a predetermined distance from the upper end. In addition, first aperture 31, opening to both the first port 9 side of first groove 30 and upper aperture 25, is provided in spool 24. Further, second aperture 32, opening to both the fourth port 13 side of first groove 30 and upper aperture 25, is likewise provided in spool 24.

When spool 24 is in a stationary state, first groove 30 directly communicates first port 9 and fourth port 13. In addition, when spool 24 is in a stationary state, first groove 30 communicates first port 9 and fourth port 13 via first aperture 31, upper aperture 25 and second aperture 32.

Furthermore, as described above, first port 9 is formed at a predetermined diameter smaller than fourth port 13. As a result, first groove 30 is formed such that when spool 24 is in a state of motion, it communicates with fourth port 13 by means of the end portion of the side opposite the direction of motion (the upper end in Fig. 2), and thus enters a state in which it is not directly communicated with first port 9.

Also in spool 24, a second groove 33 having a predetermined width is provided around the periphery a predetermined distance below the aforementioned first groove 30. Spool 24 contains third aperture 34 opening to both second groove 33 and upper aperture 25. When spool 24 is in a stationary state, by means of second groove 33 and third aperture 34, upper aperture 25 and upper port 14 are communicated. When spool 24 enters a state of motion, communication between upper aperture 25 and upper port 14 is cut off. Further, in spool 24, a third groove 35 having a predetermined width is provided around the periphery a predetermined distance below the aforementioned second groove 33. In addition, spool 24 also contains fourth aperture 36 opening to third groove 35 and lower aperture 26. When spool 24 is in a stationary state, communication between lower aperture 26 and lower port 15 is cut off. When spool 24 enters a state of motion, communication between lower aperture 26 and lower port 15 becomes possible by means of this third groove 35 and fourth aperture 36.

For the sake of convenience, first aperture 31 and second aperture 32 have been described as separate entities, however since first groove 30 is provided, it is also possible to provide only one of these two apertures.

Additionally, channel 37 communicates channel 19, between flow valve 6 and the discharge side of pump 20, and channel 17, between the intake side of pump 20 and electromagnetic normally closed valve 18. In this channel 37, a relief valve 38 is provided which opens, closes and monitors the brake fluid pressure of channel 5 between master cylinder 2 and flow valve 6 (in other words, the brake fluid pressure generated by master cylinder 2). As shown in Fig. 3, this relief valve 38 contains pump communication chamber 41 and master cylinder communication chamber 42. Pump communication chamber 41 contains pump discharge communication port 39 and pump intake communication port 40. Pump discharge communication port 39 communicates to channel 19 on the discharge side of pump 20 via one side of a part of channel 37. Pump intake communication port 40 communicates to channel 17 on the intake side of pump 20 via another side of a part of channel 37. Master cylinder communication chamber 42 is provided on the side opposite the pump discharge communication port 39 side of pump communication chamber 41 and is, moreover, separated a distance from this pump communication chamber 41. In between pump communication chamber 41 and master cylinder communication chamber 42, a communication aperture 43 communicating these two chambers is provided.

Into this communication aperture 43, a piston 44 is inserted with one end protruding into master cylinder communication chamber 42 and the other end protruding into pump communication chamber 41. Additionally, inside pump communication chamber 41, a valve element 45 which can cover up pump discharge communication port 39 is provided. On the side opposite pump discharge communication port 39 of valve element 45, a spring 46 is provided. In addition, one end of piston 44 is in contact with this side of valve element 45 opposite pump discharge communication port 39. Further, a sealing element 47 is provided between master cylinder communication chamber 42 and pump communication chamber 41, sealing off the two chambers.

In this construction of relief valve 38, the brake fluid pressure of master cylinder 2 acts on the end of piston 44 protruding into master cylinder chamber 42. As a result, valve element 45 moves when the discharge pressure of pump 20 reaches a pressure greater than combined force of the brake fluid pressure of master cylinder 2 and the biasing force from spring 46. As a result of this movement of valve element 45, relief valve 38 opens, and excess discharge pressure of pump 20 is allowed to escape to the intake side of pump 20 via pump intake communication port 40. The discharge pressure of pump 20 to be supplied to fourth port 13 of flow valve 6 is controlled by this relief valve 38 at a predetermined pressure level greater (by an amount equal to the biasing force from spring 46) than the brake fluid pressure generated by master cylinder 2.

In the following the action of brake fluid pressure control apparatus 1 according to the aforementioned structure of first preferred embodiment will be explained.

During nonaction of anti-skid control, spool 24 of flow valve 6, as shown in Fig. 1, communicates master cylinder 2 and wheel cylinder 4 via first port 9, first groove 30, first aperture 31, upper aperture 25, third aperture 34, second groove 33 and upper port 14 of second port 11. As a result, brake fluid pressure control apparatus 1 is designed so that during normal action pressure increase occurs in wheel cylinder 4 in response to depression of brake pedal 3. During this time, fourth aperture 36 and third groove 35 are designed so that communication between all ports on the periphery is cut off. Additionally, the brake fluid generated by master cylinder 2 is supplied to the discharge side of pump 20 and relief valve 38 passing through fourth port 13 via first groove 30. However, on the discharge side of pump 20, a discharge valve 23 is provided which allows only the flow of brake fluid to fourth port 13 from pump 20. As well, since the open valve pressure of relief valve 38, as mentioned above, is a predetermined amount greater than the brake fluid pressure generated by master cylinder 2, supplying of brake fluid pressure to pump main element 21 or the intake side of pump 20 via these two valves does not occur.

Anti-skid control pressure decrease action occurs when it is determined, in accordance with the information from the wheel speed sensor (not shown in the Fig.s), that the vehicle wheels have entered a locked state. When this occurs, by means of the opening of electromagnetic normally closed valve 18, the brake fluid inside the portion surrounded by lower aperture 26 and the bottom portion of cylindrical portion 7, is supplied to reservoir 16. In this manner, a pressure difference is created on both sides of inner orifice 27 of spool 24. As a result of this pressure difference, spool 24 moves downwards as shown in Fig. 2. By means of this movement, spool 24 cuts off communication between second groove 33 and upper port 14, and restricts (allows only minute communication or cuts off entirely) communication between first port 9 and second port 11. In addition, by means of this downward movement of spool 24, wheel cylinder 4 and reservoir 16 become communicated via lower port 15, third groove 35, fourth aperture 36, lower aperture 26, and third port 12. In this manner, brake fluid inside wheel cylinder 4 is supplied to reservoir 16, and pressure decrease of the brake fluid pressure of wheel cylinder 4 is carried out.

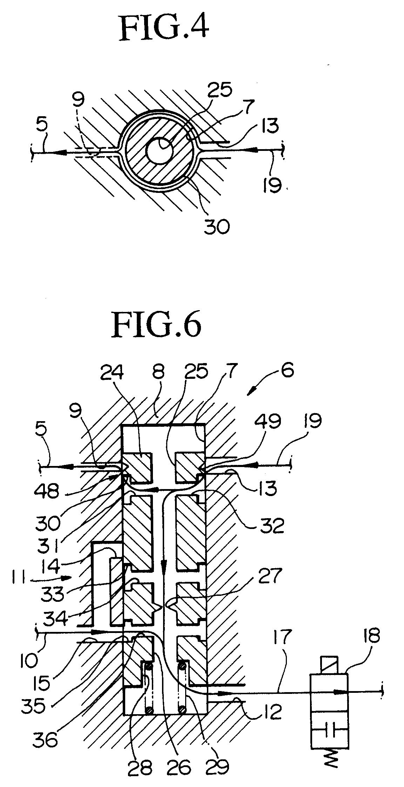

During anti-skid control, pump 20 is normally in a driving state. When spool 24 moves in the aforementioned manner, first groove 30 of spool 24 is communicated to fourth port 13 at the portion towards the end opposite the direction of movement of the spool. At this time, first port 9 arranged coaxially with fourth port 13, does not communicate directly with first groove 30 since its diameter is formed a predetermined amount smaller than that of fourth port 13. However, first port 9 and first groove 30, or first port 9 and fourth port 13 become minutely communicated via clearance 48 between the outer periphery face of spool 24, between first port 9 and first groove 30, and the inner periphery face of cylindrical portion 7 of casing 8. As a result, during pressure decrease when electromagnetic normally closed valve 18 opens, brake fluid discharged from pump 20 is supplied from fourth port 13 to reservoir 16 via first groove 30, second aperture 32, upper aperture 25, inner orifice 27, lower aperture 26 and third port 12 in an approximate fixed flow amount due to constriction by inner orifice 27. On the other hand, during pressure increase (repressurization) when electromagnetic normally closed valve 18 closes, brake fluid discharged from pump 20 is supplied from fourth port 13 to wheel cylinder 4 via first groove 30, second aperture 32, upper aperture 25, inner orifice 27, lower aperture 26, fourth aperture 36, third groove 35 and lower port 15 of second port 11 in an approximate fixed flow amount due to similar constriction by inner orifice 27. In both of the aforementioned cases, pressure decrease and pressure increase, when the pressure on the discharge side of pump 20 or the pressure inside spool 24 becomes greater than the pressure of master cylinder 2, a minute portion of the brake fluid discharged from pump 20 is designed to return to master cylinder 2 by the aforementioned clearance 48 between the outer periphery face of spool 24 and the inner periphery face of casing 8, in an approximate fixed flow amount due to constriction by clearance 48 (See Fig. 4).

Consequently, the aforementioned clearance 48 becomes a second orifice communicating fourth port 13 and first port 9. As a result, unpleasant pedal kickback is prevented. Moreover, it becomes unnecessary to provide a channel and outer orifice communicating first port 9 and fourth port 13 in casing 8. In this manner, the entire body of the brake fluid pressure control apparatus can be made compact, and manufacturing costs therein can be reduced.

Moreover, in the first preferred embodiment, the discharge pressure from pump 20 to be supplied to fourth port 13, in other words to flow valve 6, is controlled by relief valve 38 at a pressure level which is a predetermined amount greater than the brake fluid pressure generated by master cylinder 2. As a result, when the discharge pressure of pump 20 is higher than the brake fluid pressure generated by master cylinder 2, the difference in pressure between the brake fluid pressure generated by master cylinder 2 and the brake fluid pressure supplied to flow valve 6 via relief valve 38, becomes fixed. As a result of passing of brake fluid equivalent to this pressure difference through inner orifice 27 and the aforementioned clearance 48, fluctuation of pressure supplied to master cylinder 2 via the aforementioned clearance 48 can be effectively prevented. As well, relief valve 38 can prevent unnecessary rising of the brake fluid pressure between the discharge side of pump 20 and flow valve 6.

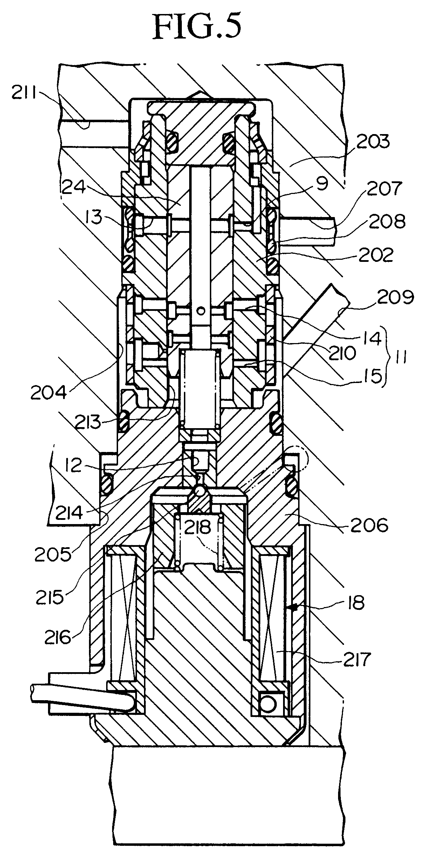

In the following, a modification of the first preferred embodiment shown in Fig. 5 will be explained. This modification is designed such that the aforementioned flow valve and electromagnetic normally open valve are combined into one structure; a port is formed in a sleeve member which is inserted in a fixed manner into the interior of a casing, forming a section of this casing; a flow channel is especially provided in this casing which communicates to this port of the aforementioned sleeve member (ie. communicates to the master cylinder); and a spool is arranged slidably to this sleeve member.

Flow valve 6 is inserted inside sleeve (casing) 202. Inside of this sleeve 202, first port 9, second port 11 and fourth port 13 are respectively provided in predetermined positions. This sleeve 202 is inserted into opening 204 of housing 203. Opening portion 205 of housing 203 is designed to be closed off by closing member 206, and sleeve 202 is fixed to housing 203. First port 9 of sleeve 202 is communicated to channel 211 of housing 203, and in turn this channel 211 is communicated to the master cylinder. Second port 11 is communicated to channel 209 of housing 203 via filter 210 and this channel 209 is in turn communicated to the wheel cylinder.

Additionally, fourth port 13 communicates to channel 207 of housing 203 via filter 208: this channel 207 communicates with the pump. As well, an opening portion 213 at the lower part of sleeve pump port 202 in Fig. 5 is communicated to third port 12 which is enclosed in closing member 206; in this closing member 206, an electromagnetic valve 20 which communicates and cuts off channel 214 communicating to third port 12 is provided. This electromagnetic valve 20 is constructed from armature 216, wherein valve portion 215 communicating to and cutting off channel 214, is provided. Electromagnetic portion 217 which communicates to channel 214 and moves this armature 216 using magnetization, and spring 218, which provides an urging force to armature 216 in the case when electromagnetic portion 217 is not magnetized and closes channel 214 using this armature 216, are also provided.

In the following an explanation of the second preferred embodiment of the present invention will be given with reference to Fig. 6. Further, this second preferred embodiment differs from the above first embodiment in that an additional minute groove 49 is provided in spool 24. The following explanation will focus on this different part; all parts similar to those in the aforementioned first embodiment will be denoted by similar numerals and their descriptions will be omitted.

In regards to flow valve 6 of the second preferred embodiment, a V-shaped, minute groove 49 is provided a predetermined distance above first groove 30, around the entire outer periphery of spool 24. During nonaction of anti-skid control, when spool 24 is in a stationary state, this minute groove 49 opens to neither first port 9 nor fourth port 13; however, during anti-skid control action when spool 24 is in a state of motion, this minute groove 49 opens to both first port 9 and fourth port 13, minutely communicating these two ports.

In this manner, by means of the brake fluid pressure control apparatus according to the structure of the second preferred embodiment, during anti-skid control when spool 24 of flow valve 6 moves, first groove 30 of the aforementioned spool 24 communicates to fourth port 13 at the portion towards the end opposite the direction of movement of the spool as in the first preferred embodiment, while also minutely communicating to first port 9 via the clearance between this first port 9 and first groove 30. Together with this, minute groove 49 minutely communicates fourth port 13 and first port 9.

Consequently, this minute groove 49 together with clearance 48 between first port 9 and first groove 30 serve as a second orifice, through which a portion of brake fluid discharged from pump 20 to fourth port 13 via relief valve 38 is constricted and returned to the master cylinder 2 at an approximate fixed flow amount. In this manner, as in the first embodiment, unpleasant pedal kickback can be prevented, and since it is not necessary to provide in casing 8 a channel or outer orifice communicating first port 9 and fourth port 13, the apparatus can be made compact and manufacturing costs therein can be effectively reduced.

Moreover, minute groove 49 is provided on the periphery of the spool, thus workability is also superior. In addition, since the size of this minute groove 49 can be changed easily, variation of the flow channel area through which brake fluid returning to master cylinder 2 flows, in other words, variation of the flow amount of brake fluid returned to master cylinder 2, can be easily carried out. Consequently, in the case when recognition of the anti-skid state through the pedal is desired, pedal kickback can be set in a range in which unpleasant effects do not accompany it. Additionally, due to the presence of the aforementioned minute groove 49, even in the case when spool 24 is fixed to casing 8, such as that shown in Fig. 6, the communication of all ports, although small, can be maintained and thus in regards to safety this situation is preferred.

As relief valve 38, in addition to a type of valve in which the open valve pressure changes according to the pressure of the brake fluid pressure of the master cylinder, it is also possible to employ a valve which opens at a fixed pressure.

## Claims

1. A brake fluid pressure control apparatus possessing anti-skid control function which, in order to perform anti-skid control of vehicles, carries out in response to the behavior of the vehicle wheels, pressure decrease and pressure increase (repressurization) of brake fluid pressure supplied from a master cylinder, connecting to a brake pedal, to a wheel cylinder which performs braking of vehicle wheels; said brake fluid pressure control apparatus provided in between said master cylinder and said wheel cylinder and comprising:
(A) a normally closed valve which opens when brake fluid pressure decreases, and closes when brake fluid pressure increases;
(B) a reservoir for receiving brake fluid during brake fluid pressure decrease;
(C) a pump which intakes brake fluid inside of said reservoir and discharges this brake fluid;
(D) a flow valve comprising:
(a) a casing comprising:
(1) master cylinder communication port communicating to said master cylinder;
(2) wheel cylinder communication port communicating to said wheel cylinder;
(3) reservoir communication port communicating to said reservoir and intake side of said pump via said normally closed valve; and
(4) pump communication port communicating to the discharge side of said pump;
(b) a spool provided moveably inside said casing; said spool, at the time of anti-skid control, moves by means of the difference in pressure created on both sides of said spool due to the opening of the normally closed valve, and together with limiting communication between said master cylinder communication port and said wheel cylinder communication port, said spool intakes brake fluid from said pump communication port which was discharged from said pump, and supplies this brake fluid to one of said wheel cylinder communication port and said reservoir communication port in an approximate fixed flow amount via an inner orifice provided on the inner portion;
wherein a groove portion, provided on the periphery of said spool, communicates to said pump communication port during anti-skid control by means of the part of said groove portion which lies opposite the direction of movement of said spool;
an axis of said pump communication port and an axis of said master cylinder communication port are arranged so that they are positioned on the plane which lies orthogonal to the direction of movement of said spool, and the diameter of said master cylinder communication port is formed smaller than the diameter of said pump communication port by a predetermined amount in a manner such that during anti-skid control said master cylinder communication port does not communicate directly with said groove portion.

2. A brake fluid pressure control apparatus according to claim 1 wherein said pump communication port and said master cylinder communication port are coaxial.

3. A brake fluid pressure control apparatus according to one of claims 1 and 2, wherein a minute groove is provided on the periphery of said spool, said minute groove communicating said pump communication port and said master cylinder communication port during anti-skid control.

4. A brake fluid pressure control apparatus according to one of claims 1∼3, wherein said groove portion is provided around the entire periphery of said spool at a predetermined width.

5. A brake fluid pressure control apparatus according to one of claims 1∼4, wherein a sleeve member is inserted in a fixed manner inside said casing thereby forming a part of said casing; said master cylinder communication port, said wheel cylinder communication port and said pump communication port are formed in said sleeve member.
